(19) Europäisches Patentamt
European Patent Office
Office européen des brevets

(11) **EP 3 188 104 A1**

(12) **EUROPEAN PATENT APPLICATION**

(43) Date of publication:
**05.07.2017 Bulletin 2017/27**

(51) Int Cl.:
***G06Q 20/22*** *(2012.01)* ***G06Q 20/32*** *(2012.01)*

(21) Application number: **15203228.0**

(22) Date of filing: **31.12.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Luxembourg Institute of Science and
Technology (LIST)
4362 Esch-sur-Alzette (LU)**

(72) Inventor: **ARNOULD, Gérald
57000 Metz (FR)**

(74) Representative: **Lecomte & Partners
P.O. Box 1623
1016 Luxembourg (LU)**

(54) **PEER-TO-PEER TRANSACTION AUTHORIZATION**

(57)    The present invention presents a method and device that allow computing device to mutually authenticate themselves in the context of a previously agreed transaction, without requiring a connection to a network backend at the time of authentication.

**Fig. 1**

## Description

## Technical field

The present application lies in the field of peer-to-peer authentication of computing devices and mobile ticketing, in particular in relation with transactions involving at least two computing devices.

## Background

In known mobile ticketing systems, a ticketing backend comprising at least one ticketing server to which computing devices connect through a data communication network provides a ticketing service and possibly fee calculation services. Known solutions, for example the system disclosed in patent document WO 2015/001167 A1, rely on a data connection between a computing device, which holds a ticket relating to a transaction, and a backend of the ticketing system for authorizing the transaction. Further, known systems rely on fixed end-points or ticket readers, which are persistently connected to the backend system. Such known systems do not provide for a satisfactory solution in scenarios where no data channel to the ticketing backend is available in the place and time where and when the transaction is to be authorized, or if access to such a channel incurs important costs for the user of the device, for example due to data roaming costs in a foreign network. In such a situation, two devices need to be able to authorize a transaction between themselves, including their mutual authentication, without having access to a backend network. The transaction may relate to the use of a carpooling service or to a financial transaction.

## Technical problem to be solved

It is an objective of the present invention to alleviate at least some of the problems arising in the prior art. In particular, the invention aims at providing a method and device enabling peer-to-peer authentication between computing devices participating in a transaction, without them being in communication with a backend ticketing service or network infrastructure.

## Summary of the invention

It is an object of the present invention to provide a method for mutually authorizing at least two computing devices to take part in a transaction. Said devices each comprise first data reception and first data transmission means for transmitting and receiving data to each other using a first data communication channel. The method comprises the steps of:

- generating, using computing means at a central server, a unique cryptographic transaction ticket for each device taking part in the transaction, wherein each of said unique cryptographic transaction tickets comprises information identifying said transaction, and information allowing each device to authenticate at least one further device taking part in said transaction;
- transmitting a unique cryptographic transaction ticket from said central server to each device taking part in the transaction;
- exchanging cryptographic derivatives of said cryptographic transaction tickets between at least two of said devices and authenticating, at each device, at least one further device taking part in the transaction, based on the received cryptographic derivative and on the receiving device's own cryptographic transaction ticket;
- mutually authorizing, using computing means of said devices, the at least two devices to take part in said transaction if the authentication succeeds and if the transaction information comprised in the respective cryptographic transaction tickets matches.

The transaction information matches if the information identifying the transaction is the same in the exchanged transaction tickets. Other pieces of information comprised in the exchanged transaction ticket and relating to the transaction may preferably match if they are the same or substantially the same.

Preferably, two devices may take part in a transaction.

It is a further object of the invention to provide a method for mutually authorizing at least two computing devices to take part in a transaction. Said devices each comprise first data reception and first data transmission means for transmitting and receiving data to each other using a first data communication channel. The method comprises the steps of:

- generating, using computing means at a central server, a unique cryptographic transaction ticket for each device taking part in the transaction, wherein said unique cryptographic transaction ticket comprises information identifying said transaction, and information allowing each device to authenticate at least one further device taking part in said transaction and
- transmitting a unique cryptographic transaction ticket from said central server to each device taking part in the transaction.

It is a further object of the invention to provide a method for mutually authorizing at least two computing devices to take part in a transaction. Said devices each comprise first data reception and first data transmission means for transmitting and receiving data to each other using a first data communication channel. The method comprises the steps of:

- exchanging cryptographic derivatives of said cryptographic transaction tickets between at least two of said devices and authenticating, at each device, at least one further device taking part in the transaction, based on the received cryptographic derivative and on the receiving device's own cryptographic transaction ticket, and

- mutually authorizing, using computing means of said devices, the at least two devices to take part in said transaction if the authentication succeeds and if the transaction information comprised in the respective cryptographic transaction tickets matches.

It is a further object of the present invention to provide a method for mutually authorizing two computing devices to take part in a transaction. Said devices each comprise first data reception and first data transmission means for transmitting and receiving data to each other using a first data communication channel. The method comprises the steps of:

- generating, using computing means at a central server, a first and a second unique cryptographic transaction ticket for the first and the second device taking part in the transaction, wherein each of said unique cryptographic transaction tickets comprises information identifying said transaction, and information allowing the first respectively second device to authenticate the other device;
- transmitting a first unique cryptographic transaction ticket from said central server to the first device and transmitting a second unique cryptographic transaction ticket from the central server to the second device taking part in the transaction;
- exchanging cryptographic derivatives of said cryptographic transaction tickets between said two devices and authenticating, at the first respectively second device, the other device taking part in the transaction, based on the respectively received second/first cryptographic derivative and on the first/second cryptographic transaction ticket of the respective device;
- mutually authorizing, using computing means of said devices, the two devices to take part in said transaction if the authentication succeeds and if the transaction information comprised in the respective cryptographic transaction tickets matches.

The transaction ticket issued to a particular computing device may preferably comprise a transaction ID encrypted with the public key of said computing device.
Said cryptographic derivative of the cryptographic transaction ticket may preferably comprise a hash value computed on data which comprises said cryptographic transaction ticket. Prior to computing said hash value, the computing device preferably deciphers said cryptographic transaction ticket using its respective private key.
The information allowing each device to authenticate at least one further computing device taking part in the transaction may preferably comprise the public key of said further computing device, signed using the private key of the central server.
The method may preferably further comprise the preliminary step of registering each computing device at the central server.
The computing device may comprise a mobile phone, smartphone, tablet computer, general purpose personal computer or laptop computer, or any other suitable computing device.
The step of registering a computing device comprises the steps of:

- transmitting data uniquely identifying the computing device, from the computing device to the central server;
- cryptographically signing said data at the central server;
- transmitting the resulting cryptographically signed data from the central server to said computing device.

Preferably, the central server may verify said received information before cryptographically signing it.
Preferably, the central server may transmit its public key to the registered computing device. This transmission is preferably made during said registration step.
Said data uniquely identifying the computing device preferably comprises a hash value, computed on the computing device's private key.
Said step of cryptographically signing preferably comprises signing said data using the central server's private key.
Prior to the step of generating said cryptographic transaction ticket, the method may further preferably comprise the further steps of:

- receiving a transaction request, requesting a transaction with a requested computing device, from a requesting computing device at said central server;
- transmitting said transaction request from the central server to the requested device;
- receiving a transaction request confirmation from said requested device at said central server.

Said first data communication channel may preferably be a direct device-to-device communication channel.
Preferably, said computing devices may transmit data to the central server using a second data communication channel that is different from said first data communication channel. The second data communication channel may be a near field communication, NFC, or Bluetooth™ channel. The devices may comprise second data transmission and second data reception means for accessing said data communication channel, which may connect them to the central server.

After consumption of the transaction ticket, said computing devices taking part in the transaction may advantageously connect to a central server, which may clear any consumed transaction tickets.

Preferably, said cryptographic transaction ticket may comprise data allowing the identification of a user of a computing device to which the cryptographic transaction ticket is transmitted.

The step of generating the cryptographic transaction ticket may preferably comprise cryptographically signing the information comprised in said transaction ticket.

It is a further object of the invention to provide a computing device comprising a memory element, data transmission means, data reception means and computing means, wherein the computing means are configured for:

- receiving, using said data reception means, a transaction ticket request from a requesting computing device, said transaction involving at least two computing devices;
- generating a unique cryptographic transaction ticket for each device taking part in the transaction, wherein said unique cryptographic transaction ticket comprises information identifying said transaction, and information allowing each device to authenticate at least one further device taking part in said transaction, and
- transmitting, using said data transmission means, a unique cryptographic transaction ticket from said central server to each device taking part in the transaction.

It is a further object of the invention to provide a computing device comprising a memory element, data transmission means, data reception means and computing means, wherein the computing means are configured for:

- receiving, using said reception means,
  a unique first cryptographic transaction ticket from a computing device ;
- receiving a cryptographic derivative of another second cryptographic transaction ticket from another computing device, and authenticating, at least one further computing device taking part in the transaction, based on the received cryptographic derivative and on the first cryptographic transaction ticket, and
- authorizing at least one computing device to take part in said transaction if the authentication succeeds and if the transaction information comprised in the first and second cryptographic transaction tickets matches.

It is another object of the present invention to provide a computer configured for carrying out at least the method steps of generating said transaction tickets and transmitting them to devices taking part in the transaction, in accordance with the invention.

It is another object of the present invention to provide a computer configured for carrying out at least the method steps of exchanging cryptographic transaction tickets and mutually authorizing said devices to take part in said transaction, in accordance with the invention.

It is a further object of the present invention to provide a computer program comprising computer readable code means, which, when run on a computer, causes the computer to carry out at least the method steps of generating said transaction tickets and transmitting them to devices taking part in the transaction, in accordance with the invention.

It is a further object of the present invention to provide a computer program comprising computer readable code means, which, when run on a computer, causes the computer to carry out at least the method steps of exchanging cryptographic transaction tickets and mutually authorizing said devices to take part in said transaction, in accordance with the invention.

It is yet another object of the invention to provide a computer program product comprising a computer-readable medium on which a computer program in accordance with the invention is stored.

The features of the present invention allow computing devices to authenticate themselves to each other without relying on a third party service, that is, without a connection to an authentication platform or service. Mutual authentication of computing device is enabled even if the devices "meet" or connect to each other for the first time. The invention allows computing devices, such as mobile device, for instance smartphones, in-car devices with a screen, etc... to carry all the information required to validate a unique transaction ticket for composed services, including for example multi-modal transport journeys, financial transactions involving multiple parties, and the like. As the method in accordance with the invention does not require a network connection at the time of authorizing the transaction, it helps to reduce data roaming costs compared to solutions known in the art, when the transaction is to be authorized away from a computing device's home network.

**Brief description of the drawings**

Several embodiments of the present invention are illustrated by way of figures, which do not limit the scope of the invention, wherein:

- figure 1 is a flowchart indicating the main steps of a preferred embodiment of the method according to the invention;
- figure 2 is a protocol diagram indicating exchanges along time between computing devices and a central server, in accordance with a preferred embodiment of the invention;
- figure 3 schematically illustrates preferred embodi-

## Detailed description

This section describes the invention in further detail based on preferred embodiments and on the figures. Unless stated otherwise, features described for a specific embodiment are applicable to, and may be combined with the features of any other embodiments according to the present invention. The embodiments presented herein allow the skilled person to understand and implement the method and device in accordance with the present invention.

In the context of this invention, the term "computing device" is used to describe a computing device that takes part in a transaction, and may preferably be related to a specific user. Opposed to a "computing device" is a "central server", which provides a service for all computing devices and/or users of the described system. The description focusses on aspects that are essential for the invention to be understood by those skilled in the art. Features that are well known in the art will not be described in detail for the sake of clarity. Such features include for example the provision of specific elements of computing devices that are essential for their proper functioning, and that allow them to communicate data in a communication network. The same applies to principles of public key cryptography and private/public cryptographic key pairs, their creation, use and management, which are well known in the art.

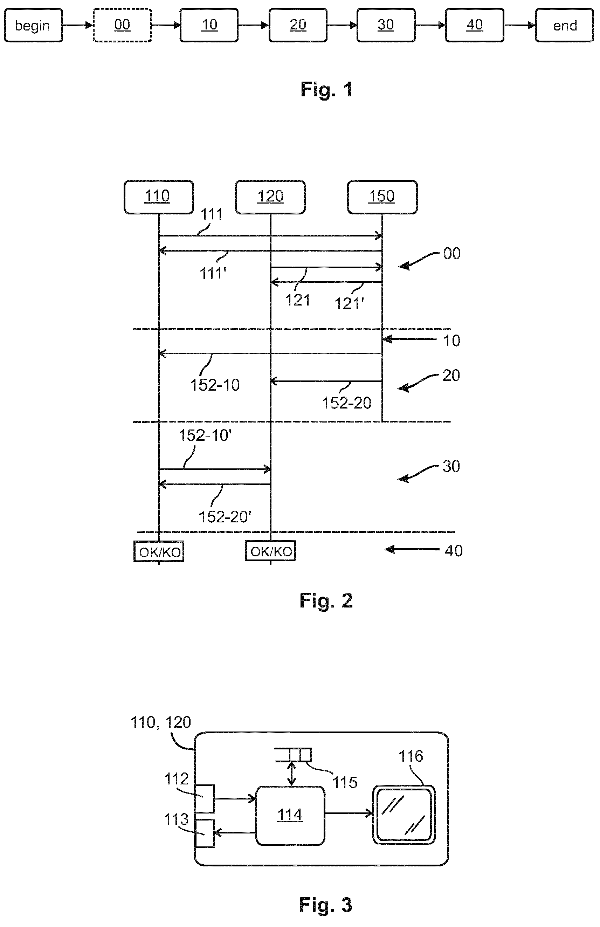

Figure 1 illustrates the main method steps according to preferred embodiment of the invention. An optional registration step 00 is indicated using dashed lines. Figure 2 further shows the information that is exchanged during each of the indicated method steps. In Figure 2, time evolves along the vertical axis. The method involves at least two computing devices 110, 120, for example smartphones or tablet computers that intend to take part in a transaction. While the example given here involves two computing devices, the method extends straightforwardly to a more important plurality of computing devices. One of the devices may represent a service provider, while the other device may represent a service consumer, the transaction linking the service provider with the service's consumer.

At step 10, a central server 10 generates a transaction ticket for each of the participating computing devices. The transaction ticket represents a service agreement between the devices taking part in the transaction. Each ticket for a given transaction comprises a unique transaction identifier or ID. Further, the ticket issued to a specific computing device taking part in the transaction comprises information allowing that device to authenticate at least one further device taking part in the transaction. The transaction ID is cryptographically signed by the central server, preferably using the respective computing device's public key. Further, the information allowing for example device 110 to authenticate device 120 may comprise device's 120 public key, signed by the private key of the central server. This procedure results in a cryptographic transaction ticket which is unique for each computing device participating in the transaction.

In step 20, the cryptographic transaction ticket 152-10 is transmitted via a data communication channel to the first computing device 110, while the cryptographic transaction ticket 152-20 is transmitted via a data communication channel to the second computing device 120. Both computing devices are configured for deciphering the received cryptographic transaction ticket. They may for example be in possession of the central server's public key, allowing them therefore to recover the other participating device's public key. The transaction ID may be recovered using each device's respective private key.

Formally, and in accordance with a particularly preferred embodiment of the invention, steps 10 and 20 may be described as follows.

Let $I = \{\iota_1, \ldots, \iota_n\}$ be the potential consumers of the transaction, $\Phi = \{\varphi_1, \ldots, \varphi_m\}$ be the potential providers and $J \subset I$ the consumers actually intending to take part in a transaction. Both the consumers and providers represent subsets of the computing devices potentially taking part in the transaction. Preferably, each computing device $j_k \subset J$, registers its intent for a transaction with $\Phi_k \subset \Phi$ to the central server.

The minimal subset of the transaction ticket may be formalized as follows:

- Cryptographic transaction ticket for computing device $j_k \in J$: public key of $\varphi_l$ signed by the central server; ID of the transaction generated by the central server $ID_{\varphi_l}^{j_k}$ (may be a cryptographic hash) encrypted with the public key of $i_k$;

- Cryptographic transaction ticket for computing device $\varphi_l \in \Phi_k$: public key of $j_k$ signed by the central server; ID of the transaction generated by the central server $ID_{\varphi_l}^{j_k}$ (may be a cryptographic hash) encrypted with the public key of $\varphi_l$ by the central server;

The public keys transmitted between the participants/computing devices to the transaction may be used to establish a secure communication channel between them during the implementation step but is not strictly mandatory since the transaction ticket is secured by itself.

In an embodiment involving more than two computing devices per transaction, the issued transaction tickets are generated so that each computing device taking part in the transaction may be authenticated by at least one further computing device taking part in the transaction.

Optionally, the transaction ticket may comprise further application specific data, such as detailed characteristics of the transaction (place, date and time of departure, destination, itinerary, price...). Any optional information is preferably also signed by the private key of the central server and encrypted with the public key of the respective computing device.

Referring again to figures 1 and 2, at step 30, the method proceeds with exchanging cryptographic derivatives 152-10', 152-20' of the cryptographic transaction tickets 152-10, 152-20 between the devices 110, 120 that take part in the transaction. Typically, the exchange takes place using a secure data communication channel, which may be a near field communication, NFC, channel or a Bluetooth™ channel, without limiting the invention to these technologies. It is important to note that the central server 150 is not involved in this step, nor in any further main steps of the method according to the invention. By way of example, the cryptographic derivative 152-10' of transaction ticket 152-10 is a hash value computed from a data string comprising the transaction ID. As the transaction ID is known to all computing devices participating in the transaction by way of their own unique transaction ticket, this information allows the parties to mutually authenticate themselves in the context of the transaction, corresponding to step 40 of the method. If the authentication fails, the transaction is not allowed to be consumed.

Formally, and in accordance with a particularly preferred embodiment of the invention, steps 30 and 40 may be described as follows.

- at the time of the realization of the transaction, computing devices $j_k$ and $\varphi_l$ establish a (secured) communication channel;
- one of $j_k$ and $\varphi_l$ act as a service provider S; the other one acts as a service consumer C;
- C requests a nonce from S;
- S sends the nonce to C;
- C generates a client_nonce and replies with:

$$\{(\text{nonce, client\_nonce}), \text{hash}\ (\text{ID}_{\varphi_l}^{j_k},\ \text{nonce,}\ \text{client\_nonce})\}$$

- S returns the corresponding hashed token.

Once the transaction is implemented, all computing devices party to the transaction may return the transaction tokens generated during the previous steps to the central server to perform an optional value clearing step.

In accordance with a preferred embodiment of the invention, the optional registration step 00 shown in Figures 1 and 2 comprises the following interactions:

- A computing device 110, 120 generates a public / private key couple;

- A computing device provides registration data to the central server, comprising:

    a unique ID 111, 121 (for instance a sha256 hash of the public key of the computing device); and optionally
    other information depending on the considered application, specifically it may comprise data allowing the user of the device to be identified (Name of the device's user, ID picture of the device's user, geographical area of the home and work place of the device's user, type of car and number of available seats in case of a collective transport scenario).

- The central server signs the received registration data and sends back a copy of the signature 111', 121' to the client, alongside the public key of the central server. Any party knowing the public key of the server is subsequently be able to verify this piece of data was signed by the trusted central server.

Advantageously, each computing device transmits its public key to the central server, which stores it in a memory element.

Preferably, every party planning to take part in any transaction guaranteed by the trusted central server needs to undertake the registration steps.

In accordance with another preferred embodiment of the invention, the method comprises a preliminary step of requesting a transaction, before any transaction ticket is generated by the central server. Formally, each computing device $j_k \in J$, registers its intent for a transaction with $\Phi_k\ c\ \Phi$ to the central server. Each computing device $\varphi_l \in \Phi_k$, $\varphi_l$ either

- agrees with the transaction offer from $j_k$: both $i_k$ and $\varphi_l$ receive a transaction ticket signed with the private key of the central server; or
- disagrees with the transaction offer from $j_k$: $j_k$ receives a denial notification from the central server.

The described peer-to-peer authentication protocol is applicable to any kind of transaction which involves 1 client and 1 server, N clients and one server, 1 client and K servers, or N clients and K servers. In the case of multiple servers for one transaction, the central server generates one aggregate cryptographic transaction ticket and transmits it to the requesting computing device /client, said aggregate ticket comprising all (atomic) transaction IDs and the respective information required for authenticating the multiple servers. Each atomic transaction, involving the client device and one of the server devices, is then authorized as described here above.

The method according to the invention may for example be applied to a car-pooling service. Users may register their computing devices at a central server via Web interface, in accordance with step 00 of the method. Preferably, the central server is configured for providing a list of available users for providing a service to other users of the system. The list may at any time only comprise such users with which the central server is capable of communication at that time. One user $j$ may request, through the central sever, a drive from location A to location B at time T using the services of user $\varphi$. If both users agree to take part in the requested transaction, the central server generates the corresponding unique cryptographic transaction tickets in accordance with step 10 of the method. The cryptographic transaction tickets are transmitted to the respective computing devices of both users in accordance with step 20. The issuance of the transaction tickets may be subject to a payment. The transaction ticket may for example include the agreed time T and the GPS coordinates locations A and B.

At a later time, preferably approximately at the time T agreed upon earlier, the devices of the respective users establish a direct device-to-device channel to exchange their respective transaction tickets, or a cryptographic derivative thereof, corresponding to step 30 of the method. Each of the devices is configured to authorize the transaction if the transaction data in both tickets matches, corresponding to step 40 of the method. Each computing device may provide its user with an audible or visual signal indicating that the transaction is either authorized or not, depending on the outcome of the peer-to-peer authentication protocol. The scenario straightforwardly extends to situations where multiple car-pooling users use one provider, or where multiple providers are required to get from location A to location B, or combinations thereof.

Figure 3 schematically illustrates a computing device 110, 120. The device comprises first data reception means 112 and first data transmission means 113 for establishing a direct device-to-device data communication channel with other computing devices. A memory element 115 is provided for storing any received data. The device further comprises computing means, such as a central processing unit, CPU, 114, which is programmed to implement the method steps according to the invention and as thoroughly described here above. In the illustrated example, the device further comprises displays means 116 for providing visual feedback to the device's user. The device may further comprise non-illustrated second data transmission and reception means, for communicating with the central server via a different communication channel.

It should be understood that the detailed description of specific preferred embodiments is given by way of illustration only, since various changes and modifications within the scope of the invention will be apparent to those skilled in the art. The scope of protection is defined by the following set of claims.

## Claims

1. Method for mutually authorizing at least two computing devices (110, 120) to take part in a transaction, wherein said devices each comprise first data reception (112) and first data transmission means (113) for transmitting and receiving data to each other using a first data communication channel, the method comprising the steps of:

   a) generating, using computing means at a central server (150), a unique cryptographic transaction ticket (152-10, 152-20) for each device (110, 120) taking part in the transaction, wherein each of said unique cryptographic transaction tickets (152-10, 152-20) comprises information identifying said transaction, and information allowing each device (110, 120) to authenticate at least one further device taking part in said transaction (10);
   b) transmitting a unique cryptographic transaction ticket (152-10, 152-20) from said central server (150) to each device (110, 120) taking part in the transaction (20);
   c) exchanging cryptographic derivatives (152-10', 152-20') of said cryptographic transaction tickets between at least two of said devices (110, 120) and authenticating, at each device (110, 120), at least one further device taking part in the transaction, based on the received cryptographic derivative (152-10', 152-20') and on the receiving device's own cryptographic transaction ticket (152-20, 152-10) (30);
   d) mutually authorizing, using computing means (114) of said devices (110, 120), the at least two devices to take part in said transaction if the authentication succeeds and if the transaction information comprised in the respective cryptographic transaction tickets matches (40).

2. Method according to claim 1, wherein two devices take part in a transaction.

3. Method according to any of claims 1 or 2, wherein the method further comprises the preliminary step of registering (00) each computing device (110, 120) at the central server (150).

4. Method according to claim 3, wherein the step of registering a computing device comprises the steps of:

   - transmitting data (111, 121) uniquely identifying the device, from the computing device (110, 120) to the central server (150);
   - cryptographically signing said data (111, 121) at the central server;
   - transmitting the resulting cryptographically signed data (111', 121') from the central server to said device (110, 120).

**5.** Method according to any of claims 1 to 4, wherein, prior to the step of generating said cryptographic transaction ticket, the method comprises the further steps of:

- receiving a transaction request, requesting a transaction with a requested device, from a requesting device at said central server;
- transmitting said transaction request from the central server to the requested device;
- receiving a transaction request confirmation from said requested device at said central server.

**6.** Method according to any of claims 1 to 5, wherein said first data communication channel is a direct device-to-device communication channel.

**7.** Method according to any of claims 1 to 7, wherein said computing devices transmit data to the central server using a data communication channel that is different from said first data communication channel.

**8.** Method according to any of claims 1 to 7, wherein said cryptographic transaction ticket comprises data allowing the identification of a user of a computing device to which the cryptographic transaction ticket is transmitted.

**9.** Method according to any of claims 1 to 8, wherein said step of generating the cryptographic transaction ticket comprises cryptographically signing the information comprised in said transaction ticket.

**10.** A computing device comprising a memory element, data transmission means, data reception means and computing means, wherein the computing means are configured for:

- receiving, using said data reception means, a transaction ticket request from a requesting computing device, said transaction involving at least two computing devices;
- generating a unique cryptographic transaction ticket for each device taking part in the transaction, wherein said unique cryptographic transaction ticket comprises information identifying said transaction, and information allowing each device to authenticate at least one further device taking part in said transaction;
- transmitting, using said data transmission means, a unique cryptographic transaction ticket from said central server to each device taking part in the transaction.

**11.** A computing device (110, 120) comprising a memory element (115), data transmission means (113), data reception means (112) and computing means (114), wherein the computing means are configured for:

- receiving, using said reception means, a unique first cryptographic transaction ticket from a computing device;
- receiving a cryptographic derivative of another second cryptographic transaction ticket from another computing device, and authenticating, at least one further computing device taking part in the transaction, based on the received cryptographic derivative and on the first cryptographic transaction ticket;
- authorizing at least one computing device to take part in said transaction if the authentication succeeds and if the transaction information comprised in the first and second cryptographic transaction tickets matches.

**12.** A computer configured for carrying out at least method steps a and b or method steps c and d according to claim 1.

**13.** A computer program comprising computer readable code means, which, when run on a computer, causes the computer to carry out at least method steps a and b, or method steps c and d according to claim 1.

**14.** The computer program according to claim 13, further comprising computer readable code means, which, when run on a computer, causes the computer to further carry out the method according to any of claims 2 to 9.

**15.** A computer program product comprising a computer-readable medium on which the computer program according to any of claims 13 or 14 is stored.

```
┌────────┐     ┌ ─ ─ ─ ┐     ┌────────┐     ┌────────┐     ┌────────┐     ┌────────┐     ┌────────┐
│ begin  │ ──▶ │  00   │ ──▶ │   10   │ ──▶ │   20   │ ──▶ │   30   │ ──▶ │   40   │ ──▶ │  end   │
└────────┘     └ ─ ─ ─ ┘     └────────┘     └────────┘     └────────┘     └────────┘     └────────┘
```

**Fig. 1**

**Fig. 2**

**Fig. 3**

Europäisches
Patentamt

European
Patent Office

Office européen
des brevets

# EUROPEAN SEARCH REPORT

Application Number

EP 15 20 3228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/265984 A1 (SANTHANA PRAKASH [US]) 15 November 2007 (2007-11-15) * abstract; figure 2A * ----- | 1-15 | INV. G06Q20/22 G06Q20/32 |
| X | US 2015/186887 A1 (KHAN AHMER A [US] ET AL) 2 July 2015 (2015-07-02) * abstract; figures 1-3 * ----- | 1-15 | |
| X | EP 2 388 744 A2 (INTEL CORP [US]) 23 November 2011 (2011-11-23) * abstract; figure 1 * ----- | 1-15 | |
| X | US 8 290 876 B1 (POWELL STEVEN DOUGLAS [US]) 16 October 2012 (2012-10-16) * abstract; figure 1 * ----- | 1-15 | |

TECHNICAL FIELDS
SEARCHED (IPC)

G06Q

The present search report has been drawn up for all claims

| Place of search | Date of completion of the search | Examiner |
|---|---|---|
| Munich | 16 February 2016 | Weidmann, Matthias |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 20 3228

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2016

| Patent document cited in search report | | | Publication date | Patent family member(s) | | | Publication date |
|---|---|---|---|---|---|---|---|
| US 2007265984 | A1 | | 15-11-2007 | NONE | | | |
| US 2015186887 | A1 | | 02-07-2015 | US | 2015186887 | A1 | 02-07-2015 |
| | | | | WO | 2015102790 | A1 | 09-07-2015 |
| EP 2388744 | A2 | | 23-11-2011 | CN | 102254259 | A | 23-11-2011 |
| | | | | EP | 2388744 | A2 | 23-11-2011 |
| | | | | JP | 5389860 | B2 | 15-01-2014 |
| | | | | JP | 2011248880 | A | 08-12-2011 |
| | | | | KR | 20110128251 | A | 29-11-2011 |
| | | | | KR | 20130135804 | A | 11-12-2013 |
| | | | | RU | 2012155628 | A | 27-06-2014 |
| | | | | US | 2011289004 | A1 | 24-11-2011 |
| | | | | WO | 2011146678 | A2 | 24-11-2011 |
| US 8290876 | B1 | | 16-10-2012 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015001167 A1